(19) Europäisches Patentamt
European Patent Office
Office européen des brevets

(11) **EP 3 910 296 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **21172169.1**

(22) Anmeldetag: **04.05.2021**

(51) Internationale Patentklassifikation (IPC):
**G01F 1/66** (2022.01)   **G01F 1/667** (2022.01)
**G01F 25/10** (2022.01)   **G01N 29/02** (2006.01)
**G01N 29/024** (2006.01)   **G01N 29/032** (2006.01)
**G01N 29/22** (2006.01)   **G01N 29/34** (2006.01)
**G01N 29/44** (2006.01)   *G01P 5/24* (2006.01)

(52) Gemeinsame Patentklassifikation (CPC):
**G01F 1/662; G01F 1/66; G01F 1/667; G01F 25/10;
G01N 29/024; G01N 29/032; G01N 29/222;
G01N 29/341; G01N 29/348; G01N 29/4427;
G01N 29/4454; G01N 29/4481;** G01N 2291/015;
G01N 2291/0423

(54) **VERFAHREN ZUM BETRIEB EINER MESSEINRICHTUNG UND MESSEINRICHTUNG**

METHOD FOR OPERATING A MEASURING DEVICE AND MEASURING DEVICE

PROCÉDÉ DE FONCTIONNEMENT D'UN DISPOSITIF DE MESURE ET DISPOSITIF DE MESURE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **12.05.2020 DE 102020002837**

(43) Veröffentlichungstag der Anmeldung:
**17.11.2021 Patentblatt 2021/46**

(73) Patentinhaber: **Diehl Metering GmbH
91522 Ansbach (DE)**

(72) Erfinder:
• **Benkert, Andreas
91522 Ansbach (DE)**
• **Mayle, Michael
91522 Ansbach (DE)**

(74) Vertreter: **Diehl Patentabteilung
c/o Diehl Stiftung & Co. KG
Stephanstraße 49
90478 Nürnberg (DE)**

(56) Entgegenhaltungen:
WO-A1-98/19296      WO-A2-2010/034713
US-A1- 2009 016 555      US-A1- 2016 320 219

**Beschreibung**

Die Erfindung betrifft ein Verfahren zum Betrieb einer Messeinrichtung, insbesondere eines Durchflusszählers, die ein Messvolumen, das zur Aufnahme oder Führung eines Fluids dient, einen an einer Seitenwand des Messvolumens angeordneten Ultraschallwandler und eine Steuereinrichtung aufweist, wobei die Steuereinrichtung den Schwingungswandler ansteuert, um modenselektiv eine bestimmte Schwingungsmode einer in der Seitenwand des Messvolumens geführten Welle anzuregen, wobei die geführte Welle entlang der Seitenwand oder eine durch die geführte Welle angeregte weitere Welle über das Fluid zurück zu dem Ultraschallwandler oder zu einem weiteren an der oder einer weiteren Seitenwand des Messvolumens angeordneten weiteren Ultraschallwandler geführt wird und diesen zu einer Schwingung anregt, wobei die Steuereinrichtung Messdaten erfasst, die diese Schwingungen betreffen, und in Abhängigkeit der Messdaten eine die Messeinrichtung oder das Fluid betreffende Ergebnisinformation ermittelt. Daneben betrifft die Erfindung eine Messeinrichtung.

Eine Möglichkeit einen Durchfluss durch ein Messvolumen beziehungsweise Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflektionen an Wänden oder speziellen Reflektionselementen zu einem weiteren Ultraschallwandler geführt wird. Aus der Laufzeit der Ultraschallwelle zwischen den Ultraschallwandlern beziehungsweise aus einer Laufzeitdifferenz bei einer Vertauschung von Sender und Empfänger kann eine Durchflussgeschwindigkeit durch das Messrohr bestimmt werden.

Aus der Druckschrift WO 2010/034713 A2 ist es bekannt, Lamb-Wellen in eine Seitenwand eines Messrohrs einzukoppeln, die von dort in das Fluid abgestrahlt werden und zur Vermessung von Fluideigenschaften genutzt werden. Hierbei ist es bekannt, dass bei der Anregung von Lamb-Wellen mit einer bestimmten Frequenz mehrere Schwingungsmoden anregbar sind. In der genannten Druckschrift wird ausgenutzt, dass die verschiedenen angeregten Wellenmoden voneinander unterschiedliche Laufzeiten aufweisen, so dass bei einer entsprechenden Ausgestaltung des Messaufbaus Messsignale, die aus dem Empfang der verschiedenen Moden resultieren, separat verarbeitet werden können, um physikalische oder chemische Eigenschaften des im Messrohr gefüllten Mediums zu ermitteln.

Aus der Druckschrift US 2016/320219 A1 ist es bekannt, Ultraschallwandler zu verwenden, die bei zwei oder mehr Frequenzen nacheinander angeregt werden, um die Unsicherheit in den gemessenen Signalen zu verringern und dadurch die Messgenauigkeit der Messeinrichtung zu erhöhen. Weitere Beispiele von Messgeräten, die Ultraschallwandler zur Anregung von Lamb-Wellen mit unterschiedlichen Frequenzen in einer Seitenwand eines Messrohrs verwenden, sind aus den Druckschriften WO 98/19296 A1 und US 2009/016555 A1 bekannt.

Problematisch ist hierbei, dass insbesondere dann, wenn die geführte Welle über relativ kurze Strecken in der Rohrwand geführt wird häufig keine robuste Separierung der Messsignale für die verschiedenen Moden möglich ist oder diese nur durch komplexe Algorithmen möglich ist, was einerseits die erforderliche Rechenleistung zur Messdatenauswertung erhöht und andererseits potentiell zusätzliche Artefakte oder andere Fehler in den Messdaten erzeugen kann. Daher ist es in vielen Anwendungsfällen vorteilhaft, eine weitgehend modenreine geführte Welle anzuregen und zur Messung zu nutzen. Dies führt jedoch dazu, dass im Gegensatz zum obig erläuterten Vorgehen nur Informationen bezüglich der Ausbreitung einer einzigen Schwingungsmode vorliegen, womit weniger Informationen über das Fluid gewonnen werden können beziehungsweise die zusätzlich bei Nutzung mehrerer Moden vorliegenden Daten nicht zur Validierung der Messung beziehungsweise zur Beurteilung des Zustands der Messeinrichtung herangezogen werden können. Der Erfindung liegt somit die Aufgabe zugrunde, auch in Fällen, in denen im Wesentlichen modenrein angeregte geführte Wellen zur Messung genutzt werden, Zusatzinformationen bezüglich des Fluids beziehungsweise der Messeinrichtung gewinnen zu können.

Die Aufgabe wird erfindungsgemäß durch ein Verfahren nach Anspruch 1 gelöst.

Der Erfindung liegt die Idee zugrunde, dass bei einer Nutzung von unterschiedlichen Anregungsfrequenzen zu bekannten unterschiedlichen Zeiten aufgrund der Dispersionsrelation der Seitenwand auch unterschiedliche Phasengeschwindigkeiten in der Seitenwand resultieren. Dies führt bei einer direkten Führung der Welle zurück zu dem Ultraschallwandler beziehungsweise zu dem weiteren Ultraschallwandler innerhalb der Seitenwand zu einer Laufzeitänderung, die wiederum von der Dispersionsrelation in der Seitenwand abhängt und somit beispielsweise von der Temperatur der Seitenwand und somit auch des Fluids beziehungsweise von einer elastischen Verformung der Seitenwand und somit dem Fluiddruck abhängt.

Bei einer Abstrahlung der weiteren Welle in das Fluid wird diese Druckwelle unter dem Rayleigh-Winkel abgestrahlt, dessen Sinus von dem Verhältnis der Schallgeschwindigkeit im Fluid zu der Phasengeschwindigkeit der geführten Welle in der Seitenwand abhängt. Somit resultieren für unterschiedliche Phasengeschwindigkeiten und somit auch für unterschiedliche Anregungsfrequenzen unterschiedliche Ausbreitungspfade für die weitere Welle, so dass beispielsweise anhand des Einflusses der Anregungsfrequenz auf die Laufzeit oder auf andere Parameter, beispielsweise auf eine Empfangsamplitude oder eine Form einer Einhüllenden der Messdaten, Rückschlüsse auf Fluideigenschaften beziehungsweise Eigenschaften der Messeinrichtung möglich sind. Beispielsweise ist es für Ansätze zum Fingerprinting, bei denen anhand verschiedener Messgrößen ein Fluidtyp oder eine Fluidzusammensetzung bestimmt werden soll, vorteilhaft durch eine Nutzung mehrerer Anregungsfrequenzen zusätzliche Informationen zu gewinnen. Ein Zusammenhang zwischen verschiedenen ermittelten Informationen beziehungsweise der Messdaten, die von verschiedenen Frequenzen abhängen, von der gesuchten Ergebnisinformation, beispielsweise einem Fluidtyp, kann beispielsweise anhand von Lookup-Tabellen vorgegeben werden, die empirisch ermittelt werden können, im Rahmen eines Maschinenlernens erlernt werden oder Ähnliches.

Unter einer in der Seitenwand geführten Welle wird insbesondere eine Welle verstanden, die sich parallel zu einer Kontaktfläche, mit der die Seitenwand das Fluid kontaktiert, ausbreitet und hierbei insbesondere Druckwellen im Fluid anregt. Bei der geführten Welle kann es sich insbesondere um eine Lamb-Welle handeln. Entsprechende geführte Wellen können als eine Mischung zwischen einer longitudinalen Welle und einer transversalen Welle beschrieben werden, während Druckwellen, wie sie sich im Fluid ausbreiten, reine Longitudinalwellen sind. Aufgrund des Transversalanteils der geführten Welle schwingen Abschnitte der Kontaktfläche senkrecht zur Kontaktfläche, wodurch die Druckwellen im Fluid angeregt werden. Wird eine solche Druckwelle in das Fluid abgestrahlt, kann diese direkt oder nach einer Reflektion an einer anderen Seitenwand des Messvolumens auf die gleiche Seitenwand beziehungsweise jene Seitenwand, die den weiteren Ultraschallwandler trägt, treffen, wodurch in dieser Seitenwand insbesondere wiederum eine geführte Welle angeregt werden kann, die zu diesem Ultraschallwandler läuft und diesen in Schwingung versetzt.

Unter einer modenselektiven Anregung ist insbesondere eine modenreine beziehungsweise eine im Wesentlichen modenreine Anregung zu verstehen. Insbesondere kann bei einer modenselektiven Anregung einer ersten Mode die Amplitude dieser Mode um wenigstens den Faktor 3 oder 10 oder 100 oder vorzugsweise um einen erheblich größeren Faktor größer sein als die Amplitude einer zweiten Mode oder aller anderen, bei einer gegebenen Anregungsfrequenz gemäß der Dispersionsrelation der Seitenwand anregbaren Moden.

Hierzu kann insbesondere ausgenutzt werden, dass bei ausreichend geringen Anregungsfrequenz nur Lamb-Wellen mit genau zwei Schwingungsmoden, nämlicher eine antisymmetrische Schwingungsmode und eine symmetrische Schwingungsmode, angeregt werden können. Wird die Anregungsgeometrie, wie später noch genauer erläutert werden wird, so gewählt, dass eine dieser Schwingungsmoden mit erheblich größerer Amplitude angeregt wird, beziehungsweise dass gezielt eine destruktive Interferenz für die andere Schwingungsmode hergestellt wird, kann eine hohe Modenselektivität erreicht werden.

Einige Ansätze zur modenselektiven Anregung, insbesondere die Nutzung von Interdigitaltransducern, erreichen hierbei eine Modenselektivität nur für eine bestimmte Anregungsfrequenz. Wie später jedoch noch für zwei beispielhafte Implementierungen erläutert werden wird, kann eine Modenselektivität auch über einen relativ breiten Bereich von Anregungsfrequenzen erreicht werden. In diesen Fällen kann das erfindungsgemäße Verfahren mit relativ geringem Aufwand implementiert werden. Anregungssignale werden in Durchflusszählern und ähnlichen Messeinrichtungen typischerweise ohnehin durch einen Mikrocontroller oder einen anderen programmierbaren Prozessor bereitgestellt, so dass Änderungen der Anregungsfrequenz unter Umständen auch durch eine reine Softwareanpassung umgesetzt werden können.

Das Messvolumen kann insbesondere durch ein Messrohr begrenzt werden. Dies ist vorteilhaft, wenn Messungen an einem strömenden Fluid erfolgen sollen. Prinzipiell können jedoch auch andere Messvolumen, beispielsweise Aufbewahrungsbehälter für das Fluid, verwendet werden. Zur Vermeidung von unnötigen Wiederholungen wird zudem im Folgenden primär der Fall diskutiert, in dem ein sendender und ein separater empfangender Ultraschallwandler verwendet werden. Bei entsprechender Wahl der Messgeometrie, insbesondere durch das Vorsehen von Reflektionselementen beziehungsweise durch Modifikation anderer Komponenten derart, dass die geführte Welle beziehungsweise die weitere Welle reflektiert wird, kann die geführte beziehungsweise weitere Welle jedoch auch zum gleichen Ultraschallwandler zurückgeführt werden. Dies ist insbesondere möglich, wenn eine Messung am stehenden Fluid erfolgen soll beziehungsweise eine Ergebnisinformation ermittelt werden soll, die vollständig oder zumindest weitgehend unabhängig von einer Strömungsgeschwindigkeit ist.

Die Steuereinrichtung kann den Ultraschallwandler in einem ersten Zeitintervall zur Anregung eines ersten Zeitabschnitts der geführten Welle mit der ersten Anregungsfrequenz und in einem von dem ersten Zeitintervall beabstandeten zweiten Zeitintervall zur Anregung eines zweiten Zeitabschnitts der geführten Welle mit der zweiten Anregungsfrequenz anregen. Hierbei kann es sich bei der Anregung im ersten und zweiten Zeitabschnitt insbesondere um separate Anregungen handeln, das heißt die Amplitude der Anregung kann zwischen diesen Anregungen auf Null fallen. Beispielsweise kann die Anregung mit einer jeweiligen rechteckigen oder anderweitig pulsfömigen Einhüllenden erfolgen. Durch geeignete Wahl des Zeitabstands zwischen den Anregungen kann sichergestellt werden, dass jener Teil der Messdaten, der die geführte Welle mit der ersten Anregungsfrequenz betrifft, und jener Teil der Messdaten, der die geführte Welle mit der zweiten Anregungsfrequenz betrifft, klar separiert werden können. Hierbei kann die Messdatenerfassung in einem durchgehenden Messzeitintervall erfolgen oder es können auch separate Messzeitintervalle für die separaten Anregungen genutzt werden, so dass in jedem der Messzeitintervalle nur Teil-Messdaten erfasst werden, die gemeinsam die Messdaten bilden.

Alternativ kann die Steuereinrichtung den Ultraschallwandler innerhalb eines Zeitintervalls durchgehend zu Schwingungen anregen, wobei die Anregungsfrequenz kontinuierlich oder stufenweise verändert wird. Im einfachsten Fall kann hierbei zu einem definierten Zeitpunkt innerhalb des Zeitintervalls zwischen der ersten und der zweiten Anregungsfrequenz gewechselt werden. Es ist jedoch auch möglich, dass zu mehreren definierten Zeitpunkten zwischen mehr als zwei Anregungsfrequenzen gewechselt wird. Hierdurch können zusätzliche Informationen über das Fluid beziehungsweise die Messeinrichtung gewonnen werden. Ein stufenweises Verändern der Anregungsfrequenz führt zu einer stufenweisen Veränderung der Phasengeschwindigkeit der geführten Welle und einer stufenweisen Änderung des Rayleigh-Winkels und somit des Ausbreitungspfades der weiteren Welle im Fluid. In den Messdaten führt dies zu einem Phasensprung im erfassten Messsignal, womit Abschnitte der Messdaten, die durch die verschiedenen Anregungsfrequenzen geprägt sind, gut separiert werden können.

Es kann jedoch auch vorteilhaft sein, die Anregungsfrequenz kontinuierlich, insbesondere rampenartig, zu ändern, was auch als "chirp" bezeichnet werden kann. Da zumindest in einigen Ausgestaltungen die Ansteuerung des Ultraschallwandlers durch ein zeitdiskret generiertes Signal erfolgt, beispielsweise bei einer Ansteuerung über einen Digital-Analog-Wandler, kann es sich bei der kontinuierlichen Änderung der Anregungsfrequenz auch um eine quasi-kontinuierliche Änderung handeln, bei der sich die Anregungsfrequenz insbesondere mehrfach während eines einzigen Schwingungszyklus des Ansteuersignals ändert. Bei einer kontinuierlichen beziehungsweise quasi-kontinuierlichen Änderung der Anregungsfrequenz ändern sich auch die Phasengeschwindigkeiten der geführten Welle und somit typischerweise auch der Ausbreitungspfad der weiteren Welle kontinuierlich beziehungsweise quasi-kontinuierlich. Hieraus resultiert ein zusätzlicher Beitrag zur Phase des Messsignals, der im Rahmen der Auswertung der Messdaten ermittelt werden kann, um beispielsweise einen Zusammenhang zwischen der Änderung der Anregungsfrequenz und einer Laufzeitänderung zu ermitteln. Die Stärke beziehungsweise Form dieses Zusammenhangs kann ausgewertet werden, um die Ergebnisinformation zu ermitteln.

Erfindungsgemäß ermittelt die Steuereinrichtung in Abhängigkeit der Messdaten eine erste Laufzeit für die mit der ersten Anregungsfrequenz angeregte bestimmte Schwingungsmode und eine zweite Laufzeit für die mit der zweiten Anregungsfrequenz angeregte bestimmte Schwingungsmode und eine Laufzeitdifferenz zwischen der ersten und der zweiten Laufzeit und in in Abhängigkeit der Laufzeitdifferenz ermittelt die Steuereinrichtung die Ergebnisinformation. Erfolgt die Anregung mit den unterschiedlichen Anregungsfrequenzen wie obig erläutert in separaten Zeitintervallen, können beliebige bekannte Ansätze zur Ermittlung von Laufzeiten und somit auch zur Ermittlung der Laufzeitdifferenz herangezogen werden. Da wie obig erläutert eine stufenweise beziehungsweise kontinuierliche Änderung der Anregungsfrequenz zu einer Phasenänderung beziehungsweise einem Phasensprung in dem durch die Messdaten beschriebenen Messsignal führt, können insbesondere diese Phasenänderungen beziehungsweise -sprünge ausgewertet werden, um eine Laufzeitdifferenz zu ermitteln. Verschiedene Ansätze zur Detektion der Phasenlage von Signalen werden bereits zur Bestimmung von Laufzeit in bekannten Durchflusszählern genutzt und sollen daher nicht detailliert beschrieben werden.

Ein bekannter Nachteil von phasenbasierten Messungen von Laufzeiten beziehungsweise Laufzeitdifferenzen ist, dass die ermittelten Zeiten beziehungsweise Zeitunterschiede nur eindeutig sind, solange sichergestellt ist, dass sie kleiner als die Periodendauern der erfassten Schwingung sind. Dieses Problem kann im erfindungsgemäßen Verfahren dadurch gelöst werden, dass ausreichend kleine Stufen bei einer stufenweisen Änderung der Anregungsfrequenz genutzt werden, beziehungsweise dass eine kontinuierliche beziehungsweise quasi-kontinuierliche Änderung der Anregungsfrequenz erfolgt.

Zur Ermittlung der Ergebnisinformation wird eine in der Steuereinrichtung gespeicherte Lookup-Tabelle oder eine in der Steuereinrichtung gespeicherte Berechnungsvorschrift verwendet, die den Zusammenhang zwischen der Ergebnisinformation und der Laufzeitdifferenz vorgibt. Die Lookup-Tabelle beziehungsweise Berechnungsvorschrift kann fest vorgegeben sein, wobei beispielsweise eine Parametrisierung im Rahmen einer Kalibrierung erfolgen kann.

Die Steuereinrichtung ermittelt als Ergebnisinformation eine Durchflussgeschwindigkeit des Fluids und/oder ein Durchflussvolumen und/oder eine Ablagerungen im Messvolumen betreffende Ablagerungsinformation. Die Steuereinrichtung kann zusätzlich als Ergebnisinformation eine Schallgeschwindigkeit im Fluid und/oder einen von der Schallgeschwindigkeit abhängigen Fluidparameter und/oder einen Druck im Messvolumen und/oder eine Fluidtemperatur und/oder eine Fluidsorte oder Fluidzusammensetzung ermitteln. Die Ergebnisgröße kann ausschließlich von den Messdaten beziehungsweise insbesondere ausschließlich von den Laufzeiten für unterschiedliche Anregungsfrequenzen beziehungsweise der Laufzeitdifferenz dieser Laufzeit abhängen. Es können jedoch zusätzlich auch andere Parameter berücksichtigt werden, beispielsweise eine Laufzeitdifferenz zwischen Ausbreitungsrichtungen, Sensordaten weiterer Sensoren, beispielsweise von Temperatursensoren, etc..

Im einfachsten Fall können prinzipiell bekannte Ansätze zur Ermittlung der genannten Parameter genutzt werden, wobei diese Ansätze für mehrere Anregungsfrequenzen durchgeführt werden, so dass beispielsweise eine Validierung der Messungen oder eine Verbesserung der Genauigkeit, beispielsweise durch Mittelwertbildung oder Ähnliches, erreicht werden kann. Vorzugsweise erfolgt jedoch eine Ermittlung der genannten Größen direkt aus den Messdaten selbst. Hierbei wurde beispielsweise bezüglich einer Messung der Durchflussgeschwindigkeit beziehungsweise des Durchflussvolumens, das über einen bekannten Strömungsquerschnitt mit der Durchflussgeschwindigkeit des Fluids zusammenhängt, sowie für die Schallgeschwindigkeit des Fluids erkannt, dass für diese Größen unmittelbar ein Zusammenhang mit der Laufzeitdifferenz angegeben werden kann. Im einfachsten Fall kann ein solcher Zusammenhang empirisch erfasst werden. Der Zusammenhang kann dann als Lookup-Tabelle unmittelbar in der Steuereinrichtung gespeichert werden. Alternativ kann der Zusammenhang beispielsweise durch Fitten einer entsprechenden Funktion modelliert werden, die als Berechnungsvorschrift in der Steuereinrichtung gespeichert werden kann.

Alternativ kann auch von einem theoretischen Modell der Messeinrichtung ausgegangen werden. Beispielsweise kann für die Ausbreitung der Ultraschallwellen im Fluid von einer Strahlengeometrie ausgegangen werden, womit die Laufzeitdifferenz $\Delta t$ zwischen der Laufzeit bei Nutzung einer ersten Anregungsfrequenz $f_1$ und einer zweiten Anregungsfrequenz $f_2$ wie folgt berechnet werden kann:

$$\Delta t(f_1, f_2) = \left( \frac{l}{c_{ph}(f_1)} - \frac{l}{c_{ph}(f_2)} \right) + \frac{dn}{c_f} \left( \sqrt{1 - \frac{c_f^2}{c_{ph}(f_1)^2}} - \sqrt{1 - \frac{c_f^2}{c_{ph}(f_2)^2}} \right)$$

Hierbei ist $c_{ph}$ die Phasengeschwindigkeit der geführten Welle mit der jeweiligen Frequenz $f_1$ beziehungsweise $f_2$, d der Rohrdurchmesser, n die Anzahl der Durchquerungen dieses Durchmessers durch die weitere Welle und $c_f$ die gesuchte Schallgeschwindigkeit im Fluid. Die Phasengeschwindigkeiten $c_{ph}$ können beispielsweise gemessen werden, indem Messdaten für einen Ausbreitungspfad innerhalb der Seitenwand zwischen zwei an dieser Seitenwand angeordneten Ultraschallwandlern gemessen werden. Um eine ausreichende Messgenauigkeit zu erreichen, sollten hierbei vorzugsweise die Phasenlagen der Messsignale berücksichtigt werden, was beispielsweise anhand der Erkennung von Nulldurchgängen in den Messdaten möglich ist. Die Phasengeschwindigkeiten für die relevanten Anregungsfrequenzen können beispielsweise herstellerseitig vorgegeben werden. Sie können beispielsweise für die konkrete Messeinrichtung oder einen bestimmten Messeinrichtungstyp gemessen und in der Steuereinrichtung gespeichert werden. Alternativ wäre es beispielsweise auch möglich, entsprechende Phasengeschwindigkeiten zu bestimmten Zeitpunkten neu zu ermitteln, beispielsweise um Alterungseffekte oder Ähnliches zu berücksichtigen.

Die angegebene Formel kann analytisch nach der Schallgeschwindigkeit aufgelöst werden und dann als Berechnungsvorschrift in der Steuereinrichtung gespeichert werden. Da hierbei jedoch ein relativ komplexes Polynom vierten Grades resultiert, kann es vorteilhaft sein, stattdessen den entsprechenden Zusammenhang durch eine Lookup-Tabelle abzubilden.

Die Fluidtemperatur beziehungsweise Fluidsorte beziehungsweise Fluidzusammensetzung kann beispielsweise anhand der wie obig erläutert ermittelten Schallgeschwindigkeit bestimmt werden. Insbesondere können jedoch Ansätze zum "Fingerprinting" genutzt werden, bei denen eine Vielzahl von Informationen ermittelt werden, beispielsweise Laufzeiten, Amplituden und/oder Formen von Einhüllenden für mehrere Anregungsfrequenzen, anhand von denen, insbesondere auf Basis einer Statistik oder eines Maschinenlernens anhand von empirischen Daten, entsprechende Informationen ermittelt werden können.

Die Ablagerungsinformation kann insbesondere derart ermittelt werden, dass Ablagerungen im Messvolumen erkannt werden, wenn Messungen auf ein Abweichen von einem normalen Verhalten der Messeinrichtung hinweisen. Ablagerungen in einem Messvolumen führen insbesondere zu einem unebenen Profil des Messrohrs beziehungsweise schlecht reflektierenden Abschnitten von Seitenwänden. Dies kann beispielsweise dazu führen, dass bei einer Variation der Anregungsfrequenz und somit auch des Ausbreitungspfades statt einer kontinuierlichen Änderung der Laufzeitdifferenz Lauzeitsprünge auftreten und/oder für bestimmte Anregungsfrequenzen eine stark erhöhte Bedämpfung erkannt wird. Um Ablagerungen robust zu erkennen, kann entweder eine Messung bei bekannten Parametern, also beispielsweise bei einem fest vorgegebenen Durchfluss und einer fest vorgegebenen Fluidtemperatur, durchgeführt werden und das Ergebnis kann mit erwarteten Ergebnissen verglichen werden. Es ist jedoch auch möglich, eine Messung für relativ viele Anregungsfrequenzen durchzuführen, um auch ohne Kenntnis der weiteren Parameter ein unerwartetes Verhalten, beispielsweise eine starke Bedämpfung für bestimmte Anregungsfrequenzen oder Laufzeitsprünge in bestimmten Anregungsfrequenzbereichen, erkennen zu können.

Der und/oder der weitere Ultraschallwandler können mit einer jeweiligen Stirnfläche der oder der weiteren Seitenwand schwingungsgekoppelt sein, die in einem Winkel von wenigstens 60° oder von wenigstens 80° zu einer jeweiligen Kontaktfläche steht, mit der die oder die weitere Seitenwand das Fluid kontaktiert. Insbesondere kann die jeweilige Stirnfläche im Wesentlichen senkrecht auf der Kontaktfläche stehen, wobei von einem Winkel von 90°, beispielsweise toleranzbedingt, um weniger als 5° oder weniger als 1° abgewichen werden kann. Insbesondere kann die Stirnfläche an einem Ende der Seitenwand in einer Längsrichtung eines als Messvolumen genutzten Messrohrs, insbesondere an dem von dem jeweils anderen Ultraschallwandler abgewandten Ende, angeordnet sein.

Im Rahmen von Versuchen wird festgestellt, dass bei einer solchen stirnseitigen Anregung eine überraschend gute Modenreinheit über einen relativ breiten Frequenzbereich von Anregungsfrequenzen erreicht werden kann. Werden Frequenzen genutzt, bei denen nur genau eine symmetrische und genau eine antisymmetrische Schwingungsmode angeregt werden kann, so kann durch Auswahl der Polarisierung eines als Ultraschallwandler genutzten piezoelektrischen Elements die anzuregende Schwingungsmode gewählt werden. Wird ein in Dickenrichtung, also senkrecht zur Kontaktfläche, polarisiertes piezoelektrisches Element genutzt, wird nahezu ausschließlich eine symmetrische Schwingungsmode der Seitenwand angeregt. Eine Polarisierung des piezoelektrischen Elements, die zu einem Scheren führt, regt hingegen primär die antisymmetrische Schwingungsmode an. Somit kann mit geringem technischen Aufwand eine weitgehende Modenreinheit erreicht werden.

Da ein direkter Fluidkontakt des Ultraschallwandlers typischerweise vermieden werden soll, kann eine Abdichtung beispielsweise erfolgen, indem eine Dichtung an der Kontaktfläche des Wellenleiters angreift. Hierbei wurde im Rahmen der Entwicklung erkannt, dass hierdurch eine geführte Welle in der Seitenwand nur wenig gedämpft wird und die Modenreinheit im Wesentlichen nicht beeinflusst wird.

Da die Nutzung von stirnseitig angekoppelten Ultraschallwandlern eine gute Modenreinheit über einen breiten Frequenzbereich ermöglicht, ist sie besonders gut für die Durchführung des beschriebenen Verfahrens geeignet, da typischerweise mit stark unterschiedlichen Anregungsfrequenzen stärkere Unterschiede in den Messungen, also beispielsweise größere Laufzeitdifferenzen, resultieren. Da wie obig erläutert die Symmetrie der angeregten geführten Wellen durch die Piezopolarisierung vorgegeben ist, ist die genutzte Schwingungsmode bei der beschriebenen Anregung in der Regel fest vorgegeben. Es ist somit typischerweise nicht möglich, verschiedene Schwingungsmoden zu nutzen, um zusätzliche Informationen über das Fluid beziehungsweise die Messeinrichtung zu gewinnen. Daher ist es in diesem Fall besonders vorteilhaft, dass die gleiche bestimmte Schwingungsmode, wie obig erläutert, mit verschiedenen Anregungsfrequenzen angeregt wird, um zusätzliche Informationen zu gewinnen.

Obwohl die obig erläuterte stirnseitige Anregung im erfindungsgemäßen Verfahren besonders vorteilhaft ist, sind prinzipiell auch andere Ausgestaltungen möglich. Beispielsweise kann die Seitenwand in voneinander beabstandeten Bereichen durch separate Schwingelemente, beispielsweise separate piezoelektrische Elemente, zu Schwingungen derart angeregt werden, dass für eine nicht gewünschte Schwingungsmode eine destruktive Interferenz resultiert. Beispielsweise kann ein bestimmtes Anregungssignal für ein erstes der Schwingelemente bereitgestellt werden und das zweite Schwingelement kann mit umgekehrter Polarität, also beispielsweise mit invertiertem Anregungssignal, und mit einer bestimmten Zeitverzögerung angesteuert werden. Die Zeitverzögerung ist hierbei derart gewählt, dass sie der Laufzeit der nicht gewünschten Schwingungsmode der geführten Welle von dem ersten Schwingelement zu dem zweiten Schwingelement entspricht. Somit resultiert zumindest für jene Richtung, in der die Schwingelemente voneinander beabstandet sind, eine im Wesentlichen modenreine Anregung, wenn die Anregungsfrequenz so gewählt wird, dass nur genau zwei Schwingungsmoden angeregt werden können, nämlich die gewünschte Schwingungsmode und die ungewünschte Schwingungsmode, für die eine destruktive Interferenz resultiert.

Vorzugsweise unterscheiden sich die erste und zweite Anregungsfrequenz um wenigstens 50 kHz oder wenigstens 100 kHz oder wenigstens 150 kHz oder um wenigstens 5 % oder um wenigstens 10 % oder um wenigstens 15 % der höheren der Anregungsfrequenzen. Beispielsweise kann als erste Anregungsfrequenz eine Frequenz von 900 kHz und als zweite Anregungsfrequenz eine Anregungsfrequenz von 1,1 MHz verwendet werden. Ein größerer Unterschied zwischen den Anregungsfrequenzen führt typischerweise auch zu einem deutlicheren Unterschied in den Messdaten, also beispielsweise zu einer größeren Laufzeitdifferenz. Dies kann zu einer höheren Genauigkeit der ermittelten Ergebnisinformation beitragen.

Als die bestimmte Schwingungsmode kann eine symmetrische oder eine antisymmetrische Schwingungsmode einer Lamb-Welle angeregt werden. Ergänzend oder alternativ können die erste und die zweite Anregungsfrequenz so gewählt werden, dass gemäß der Dispersionsrelation der Seitenwand sowohl bei der ersten als auch bei der zweiten Anregungsfrequenz genau zwei Schwingungsmoden der geführten Welle anregbar sind, von denen eine die bestimmte Schwingungsmode ist. Die modenselektive Anregung der bestimmten Schwingungsmode kann dann, wie obig erläutert, durch die verwendete Anregungsgeometrie erreicht werden.

Neben dem erfindungsgemäßen Verfahren betrifft die Erfindung eine Messeinrichtung, insbesondere einen Durchflusszähler, der ein Messvolumen, das zur Aufnahme oder Führung eines Fluids dient, einen an einer Seitenwand des Messvolumens angeordneten Ultraschallwandler und eine Steuereinrichtung aufweist, wobei die Steuereinrichtung zur Durchführung des erfindungsgemäßen Verfahrens eingerichtet ist. Allgemein ist die Messeinrichtung zur Durchführung des erfindungsgemäßen Verfahrens eingerichtet. Die obig zum erfindungsgemäßen Verfahren erläuterten Merkmale können mit den dort genannten Vorteilen auf die erfindungsgemäße Messeinrichtung übertragen werden.

Insbesondere können der und/oder der weitere Ultraschallwandler mit einer jeweiligen Stirnfläche der oder der weiteren Seitenwand schwingungsgekoppelt sein, die in einem Winkel von wenigstens 60° oder von wenigstens 80° zu einer jeweiligen Kontaktfläche steht, mit der die oder die weitere Seitenwand das Fluid kontaktiert. Dies ermöglicht, wie obig erläutert, eine modenselektive Anregung über einen weiten Frequenzbereich mit geringem technischem Aufwand.

Weitere Vorteile und Einzelheiten der Erfindung ergeben sich aus den folgenden Ausführungsbeispielen sowie den zugehörigen Zeichnungen. Hierbei zeigen schematisch:

Fig. 1  ein Ausführungsbeispiel einer erfindungsgemäßen Messeinrichtung, deren Ausführungsbeispiel das erfindungsgemäße Verfahren durchführt,

Fig. 2 und 3    Ablaufdiagramme zweier Ausführungsbeispiele des erfindungsgemäßen Verfahrens,

Fig. 4    eine Detailansicht eines weiteren Ausführungsbeispiels einer erfindungsgemäßen Messeinrichtung, und

Fig. 5 bis 7    schematisch den Zusammenhang einer ermittelten Laufzeitdifferenz mit verschiedenen Größen.

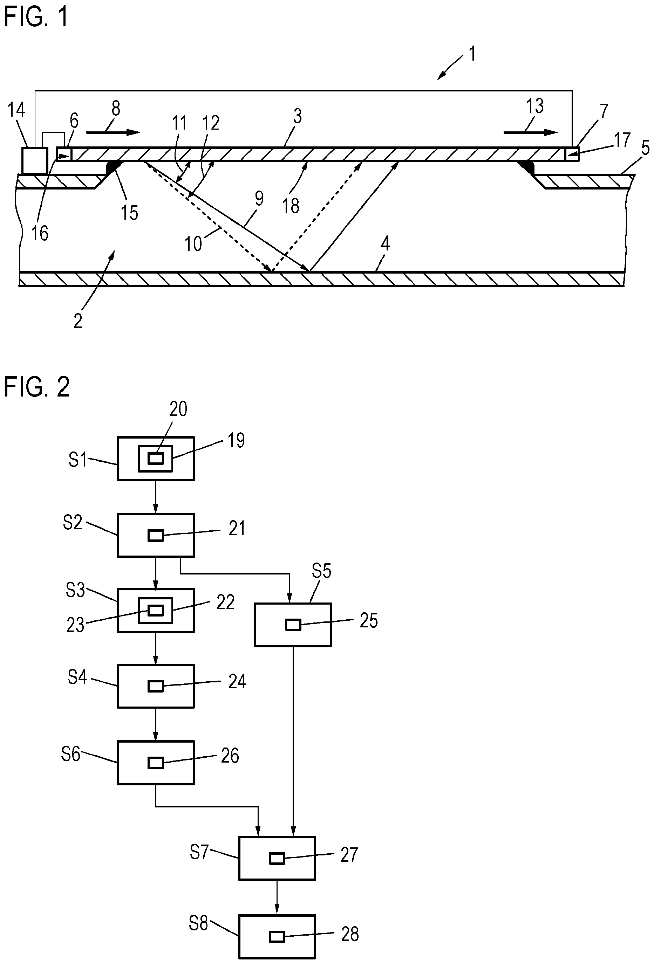

Fig. 1 zeigt eine Messeinrichtung 1, die dazu dient, wenigstens eine ein Fluid beziehungsweise eine Fluidströmung betreffende Größe zu ermitteln. Beispielsweise kann ein Volumen des Fluids, das durch das Messvolumen 2 strömt, ermittelt werden. Ergänzend oder alternativ hierzu können der Druck im Messvolumen, eine Temperatur des Fluids und/oder eine Fluidart oder Fluidzusammensetzung bestimmt werden. Das Messvolumen 2 wird durch mehrere Seitenwände 3, 4, 5 begrenzt, wobei an der Seitenwand 3 beabstandet voneinander zwei Ultraschallwandler 6, 7 angebracht sind.

Die Steuereinrichtung 14 ist dazu eingerichtet, den Ultraschallwandler 6 derart anzusteuern, dass er modenselektiv eine geführte Welle 8 in der Seitenwand 3 anregt, die sich zunächst parallel zu der Kontaktfläche 18, mit der die Seitenwand 3 das Fluid kontaktiert, ausbreitet. Da es sich bei der geführten Welle 8 um eine kombinierte Longitudinal- und Transversalwelle, insbesondere um eine Lamb-Welle, handelt, regt diese bei ihrer Ausbreitung weitere Wellen 9, 10, nämlich Druckwellen, im Fluid an, die in Abhängigkeit der Phasengeschwindigkeit der Schwingungsmode der geführten Welle 8 in unterschiedlichen Rayleigh-Winkeln 11, 12 in das Fluid abgestrahlt werden.

Im Beispiel werden die weiteren Wellen 9, 10 einmal an der gegenüberliegenden Seitenwand 4 reflektiert und regen bei ihrem Auftreffen auf die Seitenwand 3 eine weitere geführte Welle 13 an, die zum weiteren Ultraschallwandler 7 geführt wird und diesen somit in Schwingung versetzt. In alternativen Ausgestaltungen können die weiteren Wellen 9, 10 auch mehrfach an den Seitenwänden 3, 4 reflektiert werden. Es wäre auch möglich, den weiteren Ultraschallwandler 7 an der Seitenwand 4 anzuordnen, so dass die weiteren Wellen 9, 10 beispielsweise überhaupt nicht an der Seitenwand 4 reflektiert werden müssen oder zumindest einmal an der Seitenwand 3 reflektiert werden, um über die Seitenwand 4 empfangen zu werden.

Die Nutzung von durch das Fluid geführten Ultraschallwellen zur Erfassung von Fluideigenschaften beziehungsweise Strömungseigenschaften ist prinzipiell wohl bekannt. Der gezeigte Ansatz könnte beispielsweise genutzt werden, um eine Laufzeitdifferenz zwischen der Laufzeit der Ultraschallwelle vom Ultraschallwandler 6 zum Ultraschallwandler 7 und der Laufzeit in die umgekehrte Richtung zu erfassen und aus dieser eine Strömungsgeschwindigkeit zu berechnen. Auch Ansätze zur Ermittlung anderer Messgrößen sind im Stand der Technik bekannt, beispielsweise zur Ermittlung eines Drucks, einer Temperatur und einer Fluidart beziehungsweise -zusammensetzung.

Um die Ermittlung von das Fluid beziehungsweise die Fluidströmung betreffenden Ergebnisinformationen zu verbessern, beziehungsweise um zusätzliche Informationen über den Zustand des Ultraschallwandlers 1, insbesondere bezüglich Ablagerungen im Messvolumen 2, zu ermitteln, erfolgt die Ansteuerung des Ultraschallwandlers 6 durch die Steuereinrichtung 14 in der Messeinrichtung 1 derart, dass durch den Ultraschallwandler 6 zeitlich nacheinander die gleiche bestimmte Schwingungsmode, also beispielsweise ausschließlich eine antisymmetrisch oder ausschließlich eine symmetrische Lamb-Welle, mit wenigstens zwei Anregungsfrequenzen angeregt wird. Hieraus resultieren aufgrund der Dispersionsrelation der Seitenwand 3 auch unterschiedliche Phasengeschwindigkeiten der geführten Welle und somit unterschiedliche Rayleigh-Winkel 11, 12 und Ausbreitungspfade für die weiteren Wellen 9, 10. Dies ist in Fig. 1 beispielhaft für zwei Anregungsfrequenzen und somit zwei Ausbreitungspfade der weiteren Wellen 9, 10 dargestellt. Es kann jedoch auch eine größere Anzahl von Anregungsfrequenzen nacheinander verwendet werden beziehungsweise die Anregungsfrequenz kann kontinuierlich variiert werden, wie später noch erläutert werden wird.

Eine weitgehend modenreine Anregung einer bestimmten Schwingungsmode wird in der Messeinrichtung 1 dadurch erreicht, dass die Ultraschallwandler 6, 7 an Stirnseiten 16, 17 der Seitenwand 3 angeordnet sind, die im Wesentlichen senkrecht auf der Kontaktfläche 18 stehen. Wird nun beispielsweise als Ultraschallwandler 6, 7 jeweils ein piezoelektrisches Element genutzt, dessen Elektroden in Vertikalrichtung in Fig. 1 gegenüber liegen und das in die Dickenrichtung, also ebenfalls in Vertikalrichtung in Fig. 1, polarisiert ist, resultiert über einen weiteren Anregungsfrequenzbereich ausschließlich eine Anregung der niedrigsten symmetrischen Schwingungsmode einer Lamb-Welle. Wird stattdessen ein Scherpiezo genutzt, kann im Wesentlichen modenrein die antisymmetrische Schwingungsmode angeregt werden. Um einen direkten Fluidkontakt der Ultraschallwandler 6, 7 zu vermeiden, ist die Seitenwand 3 über eine Dichtung 15 mit der weiteren Seitenwand 5 verbunden. Es wurde festgestellt, dass die Dichtung 15 die geführte Welle 8 nur unwesentlich dämpft und die erreichte Modenreinheit allenfalls geringfügig beeinträchtigt.

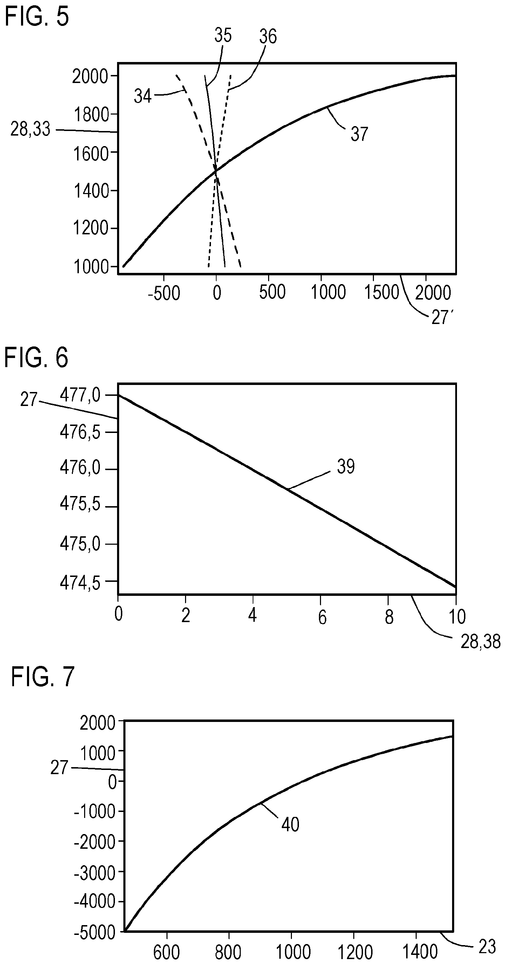

Durch die Nutzung zweier Anregungsfrequenzen resultieren auch Messdaten, die sowohl von der ersten als auch von der zweiten Anregungsfrequenz abhängen, das heißt insbesondere Messdaten zu verschiedenen Ausbreitungspfaden beziehungsweise für verschiedene Frequenzen, die potentiell bei einer Veränderung der Dispersionsrelation der Seitenwand, beispielsweise aufgrund der Temperatur oder des Drucks, unterschiedlich beeinflusst werden. Somit stehen zusätzliche Messdaten bezüglich des Fluids beziehungsweise der Messeinrichtung 1 bereit, die zur Validierung beziehungsweise der Verbesserung der Genauigkeit der Messdaten genutzt werden können beziehungsweise die die Ermittlung zusätzlicher Parameter ermöglichen. Dies wurde bereits im allgemeinen Teil der Beschreibung ausführlich dargestellt und wird später noch mit Bezug auf die Figuren 5 bis 7 an zwei Beispielen genauer erläutert werden.

Fig. 2 zeigt ein Ablaufdiagramm einer ersten Variante des Verfahrens zum Betrieb der Messeinrichtung 1. Hierbei wird in Schritt S1 zunächst in einem ersten Zeitintervall ein erster Zeitabschnitt 19 der geführten Welle 8 mit einer ersten Anregungsfrequenz 20 angeregt.

In Schritt S2 werden diesen Zeitabschnitt 19 betreffende erste Teil-Messdaten 21 erfasst.

In Schritt S3 folgt in einem von dem ersten Zeitintervall beabstandeten zweiten Zeitintervall die Anregung eines zweiten Zeitabschnitts 22 der geführten Welle 8, wobei die gleiche Schwingungsmode der geführten Welle 8 angeregt wird, hierbei jedoch eine andere Anregungsfrequenz 23 verwendet wird. In Schritt S4 werden anschließend zweite Teil-Messdaten 24 erfasst, die den zweiten Zeitabschnitt 22 der geführten Welle 8 betreffen.

Die Messdaten, also die Kombination der Teil-Messdaten 21, 24, hängen somit sowohl von der ersten als auch von der zweiten Anregungsfrequenz 20, 23 ab. Die Messdaten werden in den Schritten S5 und S6 ausgewertet, wobei in Schritt S5 eine erste Laufzeit 25 für die mit der ersten Anregungsfrequenz 20 angeregte Schwingungsmode und in Schritt S6 eine zweite Laufzeit 26 für die mit der Anregungsfrequenz 23 angeregte Schwingungsmode ermittelt wird. Da die Anregungen mit den unterschiedlichen Anregungsfrequenzen 20, 23 beziehungsweise die Erfassungen der Teil-Messdaten 21, 24 in separaten Zeitintervallen erfolgen, wird bei dem beschriebenen Vorgehen im Wesentlichen zweimal nacheinander eine Laufzeitmessung durchgeführt, wie sie prinzipiell aus dem Stand der Technik bekannt ist. Wesentlich ist hierbei, dass für die beiden Lauzeitermittlungen zwar die gleiche Schwingungsmode jedoch unterschiedliche Anregungsfrequenzen 20, 23 verwendet werden.

In Schritt S7 wird eine Laufzeitdifferenz 27 durch Subtraktionen der Laufzeiten 25, 26 voneinander ermittelt. Aus dieser kann in Schritt S8 anhand eines in der Steuereinrichtung 14 gespeicherten Zusammenhangs, insbesondere in Abhängigkeit einer dort gespeicherten Lookup-Tabelle, die Ergebnisinformation 28 ermittelt werden. Beispiele zur Ermittlung der Strömungsgeschwindigkeit beziehungsweise der Schallgeschwindigkeit im Fluid werden später noch mit Bezug auf die Fig. 5 bis 7 erläutert werden.

Alternativ wäre es beispielsweise möglich, die Ergebnisinformation 28 unmittelbar in Abhängigkeit der Messdaten beziehungsweise in Abhängigkeit der einzelnen Laufzeiten 25, 26 zu ermitteln. Zweiteres kann beispielsweise genutzt werden, um eine Abweichung von einem Sollzustand der Messeinrichtung, beispielsweise aufgrund von Ablagerungen im Messvolumen, zu erkennen. Beispielsweise kann anhand einer Lookup-Tabelle oder auf andere Weise ein bei einem normalen Betrieb der Messeinrichtung erwarteter Zusammenhang zwischen der ersten Laufzeit 25 und der zweiten Laufzeit 26 vorgegeben sein. Weicht der tatsächliche Zusammenhang deutlich von diesem erwarteten Zusammenhang ab, kann dies auf Ablagerungen oder eine andere Störung hinweisen.

Für eine solche Diagnose kann es vorteilhaft sein, mehr als die zwei genannten Anregungsfrequenzen 20, 23 zu verwenden und somit auch eine größere Anzahl von Laufzeiten 25, 26 zu erhalten. In diesem Fall kann beispielsweise die Form eines durch diese Stützpunkte ermittelten Verlaufs des Zusammenhangs zwischen Anregungsfrequenzen 20, 23 und Laufzeiten 25, 26 mit einem erwarteten Verlauf verglichen werden.

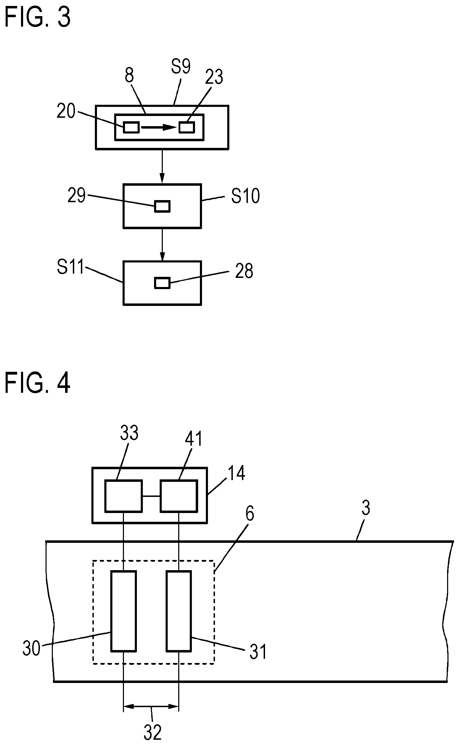

Ein Ablaufdiagramm für eine weitere Variante des Verfahrens ist in Fig. 3 dargestellt. Dort regt die Steuereinrichtung 14 den Ultraschallwandler 6 während eines bestimmten Zeitintervalls durchgehend zu Schwingungen an, um die geführte Welle 8 im Wesentlichen modenrein anzuregen, wobei während dieser Anregung die Anregungsfrequenz 20, 23 stufenweise oder kontinuierlich verändert wird. Somit ändert sich auch die Phasengeschwindigkeit der bestimmten Schwingungsmode stufenweise oder kontinuierlich. Dies führt wiederum dazu, dass der Rayleigh-Winkel 11, 12 in dem die weitere Welle 9, 10 abgestrahlt wird und somit auch der Ausbreitungspfad der weiteren Wellen 9, 10 kontinuierlich oder stufenweise variiert.

In Schritt S10 werden von der Steuereinrichtung 14 über den Ultraschallwandler 7 die Messdaten 29 erfasst. Aufgrund der Variation der Phasengeschwindigkeit der bestimmten Schwingungsmode in der Seitenwand 3 und des Ausbreitungspfades führen Sprünge beziehungsweise kontinuierliche Änderungen der Anregungsfrequenz 20, 23 auch zu Sprüngen beziehungsweise kontinuierlichen Änderungen in der Phase des durch die Messdaten beschriebenen Empfangssignals. Durch einen Vergleich der auftretenden Phasenänderungen in den Messdaten 29 mit den vorgegebenen Änderungen in der Anregungsfrequenz 20, 23 kann in Schritt S11 die Ergebnisinformation 28 bestimmt werden. Dies soll anhand von zwei einfachen Beispielen näher erläutert werden.

Wird die Anregungsfrequenz 20, 23 stufenartig ausreichend stark geändert, führt dies zu einem klar erkennbaren Phasensprung in den Messdaten 29. Durch Erkennung dieses Phasensprungs können Messdaten, die deutlich vor diesem Phasensprung liegen, somit der ersten Anregungsfrequenz 20 und Messdaten, die deutlich hinter diesem Phasensprung liegen, der zweiten Anregungsfrequenz 23 zugeordnet werden. Somit kann im wesentlich eine ähnliche Auswertung erfolgen, wie sie zu Fig. 2 erläutert wurde.

Eine kontinuierliche Änderung der Anregungsfrequenz kann beispielsweise dazu genutzt werden, Ablagerungen in dem Messvolumen 2, insbesondere an der Seitenwand 4, die den Messbetrieb stören können, zu erkennen. Eine kontinuierliche Änderung der Anregungsfrequenz 20, 23 würde beispielsweise in dem in Fig. 1 gezeigten Ausführungsbeispiel zu einer kontinuierlichen Änderung des Ausbreitungspfades der weiteren Wellen 9, 10 und somit auch zu einer kontinuierlichen Phasenänderung in den Messdaten führen. Ablagerungen an der Seitenwand 4 führen jedoch zu einem ungleichmäßigen Reflektionsverhalten und Unebenheiten, so dass bei Vorliegen ausreichend starker Ablagerungen bei einer kontinuierlichen Änderung der Anregungsfrequenz dennoch Phasensprünge in den Messdaten auftreten, da die Ablagerungen zu plötzlichen Änderungen des Ausbreitungspfades für bestimmte Rayleigh-Winkel 11, 12 führen. Zudem kann die Empfangsamplitude bei bestimmten Anregungsfrequenzen deutlich sinken, beispielsweise wenn das Reflektionsvermögen in der Seitenwand 4 aufgrund der Ablagerungen im bestimmten Bereich eingeschränkt ist beziehungsweise die weitere Welle 9, 10 dort stark gestreut wird.

Die mit Bezug auf Fig. 1 diskutierte stirnseitige Anregung der geführten Welle 8 ermöglicht auf besonders einfache Weise eine modenselektive beziehungsweise im Wesentlichen modenreine Anregung der geführten Welle über einen weiten Anregungsfrequenzbereich. Prinzipiell sind hierfür jedoch auch andere Lösungen möglich. Ein Beispiel für eine alternative Lösung wird im Folgenden mit Bezug auf Fig. 4 erläutert. Dort wird ein Ultraschallwandler 6 genutzt, der auf einer fluidabgewandten Oberfläche der Seitenwand 3 angeordnet ist. Der Ultraschallwandler 6 ist durch zwei Schwingelemente 30, 31 gebildet, deren Mitten den Abstand 32 aufweisen. Durch die Steuereinrichtung 14 wird ein Ansteuersignal 33 dem Schwingelement 30 direkt zugeführt. Das gleiche Anregungssignal 33 wird einem Invertier- und Verzögerungsglied 41 zugeführt, das die Polarität des Anregungssignals 33 umkehrt und es um eine bestimmte Verzögerungszeit verzögert. Das Ausgangssignal des Invertier- und Verzögerungsglieds 41 wird dem Schwingelement 31 zugeführt. Werden Anregungsfrequenzen genutzt, bei denen nur genau zwei Schwingungsmoden einer Lamb-Welle anregbar sind, und wird die Verzögerungszeit so gewählt, dass sie der Laufzeit einer nicht gewünschten dieser Schwingungsmoden über den Abstand 32 entspricht, resultiert für diese nicht gewünschte Schwindungsmode eine im Wesentlichen vollständig destruktive Interferenz, so dass die verbleibende Schwingungsmode modenrein angeregt werden kann. Durch entsprechende Wahl der Verzögerungszeit kann dies auch verschiedene Anregungsfrequenzen erreicht werden.

Das Invertier- und Verzögerungsglied 41 ist vorzugsweise digital implementiert, was beispielsweise durch den gleichen Mikrocontroller erfolgen kann, der auch das Anregungssignal 33 bereitstellt. Dennoch ist gegenüber der in Fig. 1 gezeigten Ausführungsform der Implementierungsaufwand typischerweise erhöht.

Fig. 5 zeigt schematisch den Zusammenhang zwischen einer Laufzeitdifferenz 27' und einer Schallgeschwindigkeit 33 im Fluid, die als Ergebnisinformation 28 ermittelt werden soll. Die Laufzeitdifferenz 27' ist in ns angegeben und die Frequenz in kHz. Der Zusammenhang wurde durch den bereits im allgemeinen Teil angegebenen analytischen Zusammenhang zwischen diesen Größen ermittelt. Die Laufzeitdifferenz 27' unterscheidet sich von der vorangehend diskutierten Laufzeitdifferenz 27 dadurch, dass ein Offset der Laufzeitdifferenz abgezogen wurde, der für die jeweilige Kurve bei einer Schallgeschwindigkeit von 1500 m/s resultiert. Dies dient zur übersichtlicheren gemeinsamen Darstellung der Kurven 34, 35, 36, 37 für unterschiedliche Anregungsfrequenzen. Die Kurven 34 bis 37 nutzen jeweils eine Frequenz von 1 MHz als erste Anregungsfrequenz. Die zweite Anregungsfrequenz ist für die Kurve 34 1,5 MHz, für die Kurve 35 0,9 MHz, für die Kurve 36 1,1 MHz und für die Kurve 37 0,5 MHz. Wie in Fig. 5 zu erkennen ist, kann, beispielsweise durch eine Lookup-Tabelle, die die entsprechende Kurve 34 bis 37 vorgibt, aus der Laufzeitdifferenz eindeutig die Schallgeschwindigkeit im Fluid bestimmt werden. Dies kann beispielsweise dazu dienen, unterschiedliche Fluide zu unterscheiden beziehungsweise eine Fluidzusammensetzung zu bestimmen.

Fig. 6 zeigt den Einfluss der Strömungsgeschwindigkeit 38, die als Ergebnisinformation 28 ermittelt werden kann, auf die Laufzeitdifferenz 27, die für die gleiche Schwingungsmode bei unterschiedlichen Anregungsfrequenzen ermittelt wurde. Die Laufzeitdifferenz 27 ist in ns angegeben und die Strömungsgeschwindigkeit 38 in m/s. Die Kurve 39 wurde hierbei für die Anregungsfrequenzen 1 MHz und 1,1 MHz, einen V-förmigen Ausbreitungspfad, die A0-Mode einer Lamb-Welle und eine Stahlplatte mit 1,5 mm Dicke als Seitenwand aus 1.4571 rostfreiem Stahl ermittelt. Der Abstand der Ultraschallwandler war 90 mm und der Messrohrdurchmesser 15 mm. Die Kurve 39 ist analytisch berechnet und zeigt einen klaren Zusammenhang dieser Größen, womit prinzipiell die Strömungsgeschwindigkeit 38 als Ergebnisinformation 28 berechnet werden kann. Aufgrund der relativ kleinen Änderungen der Laufzeitdifferenz 27 mit der Strömungsgeschwindigkeit 28 eignet sich diese Ermittlung der Strömungsgeschwindigkeit 38 allerdings eher zur Validierung einer mit üblichen Verfahren durchgeführten Messung, da sie für sich genommen eher eine geringe Genauigkeit erreicht.

Die Genauigkeit der Ermittlung einer Strömungsgeschwindigkeit durch den in Fig. 6 gezeigten Zusammenhang kann potentiell verbessert werden, indem ein größerer Unterschied der Anregungsfrequenz verwendet wird. Dies ist in Fig. 7 verdeutlicht. In dieser Figur wird von einem konstanten Durchfluss von 10 m/s ausgegangen und als erste Anregungsfrequenz wird fest eine Anregungsfrequenz von 1 MHz verwendet. Die Kurve 40 zeigt den Zusammenhang der zweiten Anregungsfrequenz 23 mit der Laufzeitdifferenz 27. Die Laufzeitdifferenz 27 ist in ns angegeben und die Anregungsfrequenz 23 in kHz. Anhand dieser Kurve ist klar erkennbar, dass größere Unterschiede in der Anregungsfrequenz auch zu größeren Laufzeitdifferenzen aufgrund einer Strömungsgeschwindigkeit führen, womit die Messgenauigkeit durch Wahl von größeren Unterschieden der Anregungsfrequenzen 20, 23 beziehungsweise auch durch Nutzung von einer größeren Zahl von Anregungsfrequenzen verbessert werden kann.

Bezugszeichenliste

| 1 | Messeinrichtung |
|---|---|
| 2 | Messvolumen |
| 3 | Seitenwand |
| 4 | Seitenwand |
| 5 | Seitenwand |
| 6 | Ultraschallwandler |
| 7 | Ultraschallwandler |
| 8 | geführte Welle |
| 9 | weitere Welle |
| 10 | weitere Welle |
| 11 | Rayleigh-Winkel |
| 12 | Rayleigh-Winkel |
| 13 | geführte Welle |
| 14 | Steuereinrichtung |
| 15 | Dichtung |
| 16 | Stirnseite |
| 17 | Stirnseite |
| 18 | Kontaktfläche |
| 19 | Zeitabschnitt |
| 20 | Anregungsfrequenz |
| 21 | Messdaten |
| 22 | Zeitabschnitt |
| 23 | Anregungsfrequenz |
| 24 | Messdaten |
| 25 | Laufzeit |
| 26 | Laufzeit |
| 27 | Laufzeitdifferenz |
| 27' | Laufzeitdifferenz |
| 28 | Ergebnisinformation |
| 29 | Messdaten |
| 30 | Schwingelement |
| 31 | Schwingelement |
| 32 | Abstand |
| 33 | Anregungssignal |
| 34 | Kurve |
| 35 | Kurve |
| 36 | Kurve |
| 37 | Kurve |
| 38 | Strömungsgeschwindigkeit |
| 39 | Kurve |
| 40 | Kurve |
| 41 | Invertier- und Verzögerungsglied |

Schritt    S1 - S11

**Patentansprüche**

**1.** Verfahren zum Betrieb einer Messeinrichtung (1), insbesondere eines Durchflusszählers, die ein Messvolumen (2), das zur Aufnahme oder Führung eines Fluids dient, einen an einer Seitenwand (3) des Messvolumens (2) angeordneten Ultraschallwandler (6, 7) und eine Steuereinrichtung (14) aufweist, wobei die Steuereinrichtung (14) den Ultraschallwandler (6, 7) ansteuert, um modenselektiv eine bestimmte Schwingungsmode einer in der Seitenwand (3) des Messvolumens (2) geführten Welle (8) anzuregen, wobei die geführte Welle (8) entlang der Seitenwand (3) oder eine durch die geführte Welle (8) angeregte weitere Welle (9, 10) über das Fluid zurück zu dem Ultraschallwandler (6) oder zu einem weiteren an der oder einer weiteren Seitenwand (3, 4) des Messvolumens (2) angeordneten weiteren Ultraschallwandler (7) geführt wird und diesen zu einer Schwingung anregt, wobei die Steuereinrichtung (14) Messdaten (21, 24, 29) erfasst, die diese Schwingung betreffen, und in Abhängigkeit der Messdaten (21, 24, 29) eine die Messeinrichtung (1) oder das Fluid betreffende Ergebnisinformation (28) ermittelt, wobei die Steuereinrichtung (14) den Ultraschallwandler (6) zeitlich nacheinander zur Anregung der bestimmten Schwingungsmode mit einer ersten und einer zweiten Anregungsfrequenz (20, 23) ansteuert und die Messdaten (21, 24, 29) über wenigstens ein Messzeitintervall misst, das derart gewählt ist, dass die Messdaten (21, 24, 29) von der ersten und der zweiten Anregungsfrequenz (20, 23) abhängen, wobei die Steuereinrichtung (14) als Ergebnisinformation (28) eine Durchflussgeschwindigkeit des Fluids und/oder ein Durchflussvolumen und/oder eine Ablagerungen im Messvolumen (2) betreffende Ablagerungsinformation ermittelt, **dadurch gekennzeichnet, dass** die Steuereinrichtung (14) in Abhängigkeit der Messdaten (21, 24, 29) eine Laufzeitdifferenz (27) zwischen einer ersten Laufzeit (25) für die mit der ersten Anregungsfrequenz (20) angeregte bestimmte Schwingungsmode und einer zweiten Laufzeit (26) für die mit der zweiten Anregungsfrequenz (23) angeregte bestimmte Schwingungsmode und in Abhängigkeit der Laufzeitdifferenz (27) die Ergebnisinformation (28) ermittelt, wobei zur Ermittlung der Ergebnisinformation (28) eine in der Steuereinrichtung (14) gespeicherte Lookup-Tabelle oder eine in der Steuereinrichtung (14) gespeicherte Berechnungsvorschrift verwendet wird, die den Zusammenhang zwischen der Ergebnisinformation (28) und der Laufzeitdifferenz (27) vorgibt.

2. Verfahren nach Anspruch 1, **dadurch gekennzeichnet, dass** einerseits die Steuereinrichtung (14) den Ultraschallwandler (6) in einem ersten Zeitintervall zur Anregung eines ersten Zeitabschnitts (19) der geführten Welle mit der ersten Anregungsfrequenz (20) und in einem von dem ersten Zeitintervall beabstandeten zweiten Zeitintervall zur Anregung eines zweiten Zeitabschnitts (22) der geführten Welle mit der zweiten Anregungsfrequenz (23) anregt, oder dass andererseits die Steuereinrichtung (14) den Ultraschallwandler (6) innerhalb eines Zeitintervalls durchgehend zu Schwingungen anregt, wobei die Anregungsfrequenz (20, 23) kontinuierlich oder stufenweise verändert wird.

3. Verfahren nach Anspruch 1 oder 2, **dadurch gekennzeichnet, dass** die Steuereinrichtung (14) als Ergebnisinformation (28) zusätzlich eine Schallgeschwindigkeit im Fluid und/oder einen von der Schallgeschwindigkeit abhängigen Fluidparameter und/oder einen Druck im Messvolumen (2) und/oder eine Fluidtemperatur und/oder eine Fluidsorte oder Fluidzusammensetzung ermittelt.

4. Verfahren nach einem der vorangehenden Ansprüche, **dadurch gekennzeichnet, dass** der und/oder der weitere Ultraschallwandler (6, 7) mit einer jeweiligen Stirnfläche (16, 17) der oder der weiteren Seitenwand (3, 4) schwingungsgekoppelt sind, die in einem Winkel von wenigstens 60° oder von wenigstens 80° zu einer Kontaktfläche (18) steht, mit der die oder die weitere Seitenwand (3, 4) das Fluid kontaktiert.

5. Verfahren nach einem der vorangehenden Ansprüche, **dadurch gekennzeichnet, dass** sich die erste und zweite Anregungsfrequenz (20, 23) um wenigstens 50 kHz oder wenigstens 100 kHz oder wenigstens 150 kHz oder um wenigstens 5 % oder um wenigstens 10 % oder um wenigstens 15 % der höheren der Anregungsfrequenzen (20, 23) unterscheiden.

6. Verfahren nach einem der vorangehenden Ansprüche, **dadurch gekennzeichnet, dass** als die bestimmte Schwingungsmode eine symmetrische oder eine antisymmetrische Schwingungsmode einer Lamb-Welle angeregt wird und/oder dass die erste und die zweite Anregungsfrequenz (20, 23) so gewählt werden, dass gemäß der Dispersionsrelation der Seitenwand (3) sowohl bei der ersten als auch bei der zweiten Anregungsfrequenz (20, 23) genau zwei Schwingungsmoden der geführten Welle (8) anregbar sind, von denen eine die bestimmte Schwingungsmode ist.

7. Messeinrichtung, insbesondere Durchflusszähler, die ein Messvolumen (2), das zur Aufnahme oder Führung eines Fluids dient, einen an einer Seitenwand (3) des Messvolumens (2) angeordneten Ultraschallwandler (6, 7) und eine Steuereinrichtung (14) aufweist, **dadurch gekennzeichnet, dass** die Steuereinrichtung (14) zur Durchführung des Verfahrens nach einem der vorangehenden Ansprüche eingerichtet ist.

8. Messeinrichtung nach Anspruch 7, **dadurch gekennzeichnet, dass** der und/oder der weitere Ultraschallwandler (6, 7) mit einer jeweiligen Stirnfläche (16, 17) der oder der weiteren Seitenwand (3, 4) schwingungsgekoppelt sind, die in einem Winkel von wenigstens 60° oder von wenigstens 80° zu einer jeweiligen Kontaktfläche (18) steht, mit der die oder die weitere Seitenwand (3, 4) das Fluid kontaktiert.

**Claims**

1. Method for operating a measurement device (1), in particular a flow meter, which has a measurement volume (2) that is used to receive or guide a fluid, an ultrasonic transducer (6, 7) arranged on a side wall (3) of the measurement volume (2), and a control device (14), wherein the control device (14) controls the ultrasonic transducer (6, 7) in order to mode-selectively excite a specific oscillation mode of a wave (8) guided in the side wall (3) of the measurement volume (2), wherein the guided wave (8) is guided along the side wall (3) or a further wave (9, 10) excited by the guided wave (8) is guided back to the ultrasonic transducer (6) via the fluid or is guided to a further ultrasonic transducer (7) arranged on the side wall or a further side wall (3, 4) of the measurement volume (2) and excites it to oscillate, wherein the control device (14) acquires measurement data (21, 24, 29) relating to this oscillation, and, in dependence on the measurement data (21, 24, 29), ascertains result information (28) relating to the measurement device (1) or the fluid, wherein the control device (14) controls the ultrasonic transducer (6) to excite the specific oscillation mode with a first and a second excitation frequency (20, 23) in temporal succession and measures the measurement data (21, 24, 29) over at least one measurement time interval which is selected such that the measurement data (21, 24, 29) are dependent on the first and the second excitation frequency (20, 23), wherein the control device (14) ascertains as result information (28) a flow rate of the fluid and/or a flow volume and/or deposition information relating to depositions in the measurement volume (2), **characterized in that** the control device (14) ascertains in dependence on the measurement data (21, 24, 29) a time-of-flight difference (27) between a first time of flight (25) for the specific oscillation mode excited with the first excitation frequency (20) and a second time of flight (26) for the specific oscillation mode excited with the second excitation frequency (23) and the result information (28) in dependence on the time-of-flight difference (27), wherein for ascertaining the result information (28) a lookup table stored in the control device (14) or a calculation rule stored in the control device (14) is used, which prescribes the relationship between the result information (28) and the time-of-flight difference (27).

2. Method according to Claim 1, **characterized in that** the control device (14) on the one hand excites the ultrasonic transducer (6) in a first time interval to excite a first time section (19) of the guided wave with the first excitation frequency (20) and in a second time interval, spaced apart from the first time interval, to excite a second time section (22) of the guided wave with the second excitation frequency (23), or **in that** the control device (14) on the other hand excites the ultrasonic transducer (6) continuously within a time interval to excitations, wherein the excitation frequency (20, 23) is changed continuously or in steps.

3. Method according to Claim 1 or 2, **characterized in that** the control device (14) ascertains as result information (28) additionally a sound velocity in the fluid and/or a fluid parameter that is dependent on the sound velocity and/or a pressure in the measurement volume (2) and/or a fluid temperature and/or a fluid type or fluid composition.

4. Method according to any of the preceding claims, **characterized in that** the ultrasonic transducer and/or the further ultrasonic transducer (6, 7) are oscillation-coupled to a respective end face (16, 17) of the side wall or the further side wall (3, 4), which encloses an angle of at least 60° or of at least 80° with a contact surface (18) with which the side wall or the further side wall (3, 4) contacts the fluid.

5. Method according to any of the preceding claims, **characterized in that** the first and second excitation frequencies (20, 23) differ by at least 50 kHz or at least 100 kHz or at least 150 kHz or by at least 5% or by at least 10% or by at least 15% of the higher of the excitation frequencies (20, 23).

6. Method according to any of the preceding claims, **characterized in that** a symmetric or an antisymmetric oscillation mode of a Lamb wave as the specific oscillation mode is excited and/or **in that** the first and the second excitation frequency (20, 23) are selected such that in accordance with the dispersion relation of the side wall (3) both at the first and also at the second excitation frequency (20, 23) exactly two oscillation modes of the guided wave (8) are excitable, of which one is the specific oscillation mode.

7. Measurement device, in particular flow meter, which has a measurement volume (2) that is used to receive or guide a fluid, an ultrasonic transducer (6, 7) arranged on a side wall (3) of the measurement volume (2), and a control device (14), **characterized in that** the control device (14) is configured for carrying out the method according to any of the preceding claims.

8. Measurement device according to Claim 7, **characterized in that** the ultrasonic transducer and/or the further ultrasonic transducer (6, 7) are oscillation-coupled to a respective end face (16, 17) of the side wall or the further side wall (3, 4), which encloses an angle of at least 60° or of at least 80° with a respective contact surface (18) with which the side wall or the further side wall (3, 4) contacts the fluid.

**Revendications**

1. Procédé permettant de faire fonctionner un dispositif de mesure (1), en particulier un compteur de débit, qui présente un volume de mesure (2) servant à recevoir ou à guider un fluide, un transducteur ultrasonique (6, 7) disposé sur une paroi latérale (3) du volume de mesure (2) et un dispositif de commande (14), dans lequel le dispositif de commande (14) pilote le transducteur ultrasonique (6, 7) pour exciter en sélection de mode un mode d'oscillation déterminée d'une onde (8) guidée dans la paroi latérale (3) du volume de mesure (2), dans lequel l'onde guidée (8) le long de la paroi latérale (3), ou une autre onde (9, 10) excitée par l'onde guidée (8), est ramenée par l'intermédiaire du fluide au transducteur ultrasonique (6) ou à un autre transducteur ultrasonique (7) disposé sur ladite ou sur une autre paroi latérale (3, 4) du volume de mesure (2) et excite celui-ci en oscillation, dans lequel le dispositif de commande (14) détecte des données de mesure (21, 24, 29) concernant ladite oscillation et détermine en fonction des données de mesure (21, 24, 29) une information de résultat (28) concernant le dispositif de mesure (1) ou le fluide, dans lequel le dispositif de commande (14) pilote le transducteur ultrasonique (6) dans le temps successivement pour exciter le mode d'oscillation déterminé à une première et une deuxième fréquence d'excitation (20, 23) et mesure les données de mesure (21, 24, 29) pendant au moins un intervalle de temps de mesure qui est sélectionné de telle sorte que les données de mesure (21, 24, 29) dépendent de la première et de la deuxième fréquence d'excitation (20, 23), dans lequel le dispositif de commande (14) détermine comme information de résultat (28) une vitesse de débit du fluide et/ou un volume de débit et/ou une information de dépôt concernant des dépôts dans le volume de mesure (2),
   **caractérisé en ce que** le dispositif de commande (14) détermine en fonction des données de mesure (21, 24, 29) une différence de temps de propagation (27) entre un premier temps de propagation (25) pour le mode d'oscillation déterminé excité à la première fréquence d'excitation (20) et un deuxième temps de propagation pour le mode d'oscillation déterminé excité à la deuxième fréquence d'excitation (23) et détermine l'information de résultat (28) en fonction de la différence de temps de propagation (27), dans lequel, pour la détermination de l'information de résultat (28), une table de consultation mémorisée dans le dispositif de commande (14) ou une règle de calcul mémorisée dans le dispositif de commande (14) est utilisée qui spécifie la relation entre l'information de résultat (28) et la différence de temps de propagation (27).

2. Procédé selon la revendication 1, **caractérisé en ce que** d'une part, le dispositif de commande excite le transducteur ultrasonique (6) dans un premier intervalle de temps pour exciter une première période de temps (19) de l'onde guidée à la première fréquence d'excitation (20) et dans un deuxième intervalle de temps espacé du premier intervalle de temps pour exciter une deuxième période de temps (22) de l'onde guidée à la deuxième fréquence d'excitation (23), ou **en ce que** d'autre part, le dispositif de commande (14) excite en continu le transducteur ultrasonique (6) en oscillations à l'intérieur d'un intervalle de temps, dans lequel la fréquence d'excitation (20, 23) est modifiée en continu ou progressivement.

3. Procédé selon la revendication 1 ou 2, **caractérisé en ce que** le dispositif de commande (14) détermine comme information de résultat (28) en plus une vitesse du son dans le fluide et/ou un paramètre de fluide dépendant de la vitesse du son et/ou une pression dans le volume de mesure (2) et/ou une température de fluide et/ou un type de fluide ou une composition de fluide.

4. Procédé selon l'une quelconque des revendications précédentes, **caractérisé en ce que** ledit et/ou l'autre transducteur ultrasonique (6, 7) sont couplés en oscillation à une surface frontale (16, 17) respective de ladite ou de l'autre paroi latérale (3, 4) qui se trouve à un angle d'au moins 60° ou d'au moins 80° par rapport à une surface de contact (18) par laquelle ladite ou l'autre paroi latérale (3, 4) entre en contact avec le fluide.

5. Procédé selon l'une quelconque des revendications précédentes, **caractérisé en ce que** la première et la deuxième fréquence d'excitation (20, 23) se distinguent d'au moins 50 kHz ou d'au moins 100 kHz ou d'au moins 150 kHz ou d'au moins 5 % ou d'au moins 10 % ou d'au moins 15 % de la fréquence supérieure des fréquences d'excitation (20, 23).

6. Procédé selon l'une quelconque des revendications précédentes, **caractérisé en ce que** comme mode d'oscillation déterminé, un mode d'oscillation symétrique ou antisymétrique d'une onde de Lamb est excité, et/ou **en ce que** la première et la deuxième fréquence d'excitation (20, 23) sont sélectionnées de telle sorte que selon la relation de dispersion de la paroi latérale (3), à la fois à la première et à la deuxième fréquence d'excitation (20, 23), exactement deux modes d'oscillation de l'onde guidée (8) peuvent être excités dont l'un est le mode d'oscillation déterminé.

7. Dispositif de mesure, en particulier compteur de débit, qui présente un volume de mesure (2) servant à recevoir ou à guider un fluide, un transducteur ultrasonique (6, 7) disposé sur une paroi latérale (3) du volume de mesure (2), et un dispositif de commande (14), **caractérisé en ce que** le dispositif de commande (14) est conçu pour exécuter le procédé selon l'une quelconque des revendications précédentes.

8. Dispositif de mesure selon la revendication 7, **caractérisé en ce que** ledit et/ou l'autre transducteur ultrasonique (6, 7) sont couplés en oscillation à une surface frontale (16, 17) respective de ladite ou de l'autre paroi latérale (3, 4) qui se trouve à un angle d'au moins 60° ou d'au moins 80° par rapport à une surface de contact (18) respective par laquelle ladite ou l'autre paroi latérale (3, 4) entre en contact avec le fluide.

## FIG. 1

## FIG. 2

FIG. 3

FIG. 4

## FIG. 5

## FIG. 6

## FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010034713 A2
- US 2016320219 A1
- WO 9819296 A1
- US 2009016555 A1